# EUROPÄISCHE PATENTSCHRIFT

(11) **EP 1 435 042 B1**
(45) Veröffentlichungstag und Bekanntmachung des Hinweises auf die Patenterteilung: **07.03.2007**
(21) Anmeldenummer: 02774339.2
(22) Anmeldetag: 12.09.2002
(51) Int. Cl.: G06F 13/00

(54) **BUSSTATION**
BUS STATION
STATION A BUS

(30) Priorität: 04.10.2001 DE 10148865
(43) Veröffentlichungstag der Anmeldung: 07.07.2004
(73) Patentinhaber: ROBERT BOSCH GMBH, 70442 Stuttgart (DE); Conti Temic microelectronic GmbH, 90411 Nürnberg (DE)
(72) Erfinder: MEIER, Klaus-Dieter, 71229 Leonberg (DE); MAURITZ, Ewald, 71287 Weissach (DE); BUEHRING, Heiko, 26125 Oldenburg (DE); BOGENRIEDER, Hans, 85077 Manching (DE); WULFF, Holger, 85051 Ingolstadt (DE)
(86) Internationale Anmeldenummer: PCT/DE2002/003391
(87) Internationale Veröffentlichungsnummer: WO 2003/032174

(56) Entgegenhaltungen:
- EP-A- 1 092 597
- FR-A- 2 736 449
- US-A- 4 227 247
- US-A- 4 813 014
- US-A- 5 214 647
- P8xC591 Data Sheet Single-chip 8-bit microcontroller with CAN controller 26 Juli 2000 (2000-07-26) XP002241636

## Beschreibung

### Stand der Technik

Die Erfindung geht aus von einer Busstation nach der Gattung des unabhängigen Patentanspruchs.

Aus der Offenlegungsschrift DE 197 40 306 A1 ist es bereits bekannt, dass bei einem Bussystem mehrere Geräte, die an den Bus angeschlossen sind, zu Gruppen zusammengefaßt werden können, die dann auch gemeinsam angesprochen werden können. Dies wird hier insbesondere für ein Master-Slave-System beschrieben.

Aus US-A 42 272 47) ist ein Controller bekannt, der programmierbar sein soll. Dabei kann eine binär codierte Dezimalbasis um eines von zehn Elementen auf einer Platine zu selektieren vorgesehen sein. Insbesondere wird die Funktion einer dezimalen Adresse dargestellt. Mit einem sogenannten BCD-Code können zehn sogenannte Slodge-Select-Signale q0 bis q9 ausgewählt werden. Aus P8 xC 591 Single-Chip 8 Bit Mikro-Controller with CAN-Controller Datasheet ist ein 8 Bit Mikro-Controller mit einem CAN-Controller bekannt. Der CAN-Controller wird in einer Multimaster-Architektur eingesetzt. Der Controller ist weiterhin dazu in der Lage, eine Gruppenadressierung vorzunehmen. Diese Gruppenadressierung wird binär durchgeführt. Weiterhin hat der CAN-Controller die Möglichkeit, sogenannte Akzeptanzfilter zu verwenden. Beim Akzeptanzfilter ist es möglich, nur bestimmte Botschaften, die über den Bus übertragen werden, zu akzeptieren.

### Vorteile der Erfindung

Die erfindungsgemässe Busstation mit den Merkmalen des unabhängigen Patentanspruchs hat demgegenüber den Vorteil, dass eine größere Flexibilität ohne einen zusätzlichen Aufwand an Adressregistersätzen und zugehörigen Logikschaltungen möglich ist. Der Vorteil liegt insbesondere darin in einer geringeren Chipfläche für einen Busstation-IC sowie in einer einfacheren Programmierung der Busstationen. Durch die Umsetzung der empfangenen Gruppenadresse in eine dezimale Zahl, ist es vorteilhafter Weise möglich, durch die Eigenschaften der dezimalen Zahlen, mehrere Gruppenadressen zu definieren. Beispielsweise können die ungerade oder die geraden Gruppenadressen als eine jeweilige Menge von

Gruppenadressen für die der jeweilige Sensor angesprochen wird, verwendet werden. Auch konnen durch das Registerwort einzelne dezimale Zahlen definiert werden, die als Gruppenadresse für die betreffende Busstation gelten.

Ein weiterer Vorteil liegt darin begründet, dass die erfindungsgemässe Busstation sowohl an einen seriellen Bus als auch an einen parallelen Bus anschließbar ist. Dabei können sowohl Master-Slave-Systeme als auch Multi-Master-Systeme verwendet werden. Multi-Master-Systeme sind beispielsweise von der Automobiltechnik von CAN (Controller Area Network)-Bus her bekannt, während Master-Slave-Systeme bei Sensor- und Zündbussen verwendet werden.

Weiterhin ist es von Vorteil, dass die Busstation entweder als Sensor, beispielsweise in einem Sensorbus, oder als Rückhaltemittel, beispielsweise in einem Zündbus ausgebildet ist. Daneben sind jedoch noch viele andere Anwendungen in der Kraftfahrzeugtechnik, in der Fertigungstechnik, in der Haustechnik und in der Kommunikationstechnik möglich.

Darüber hinaus ist es von Vorteil, dass die Busstation als Slave ausgebildet ist, so dass beispielsweise in einem Abfragemodus, also einem Polling-Betrieb ein Busmaster die einzelnen Busstationen mit Gruppenadressen anspricht und dann mit der erfindungsgemässen Ausbildung der Slave-Stationen, die Slave-Stationen ihre Gruppenadressen erkennen. Dies macht ein Master-Slave-System besonders flexibel im Hinblick auf die Adressierung der einzelnen Slaves.

Weiterhin ist es von Vorteil, dass ein Bussystem vorhanden ist, an das die erfindungsgemässe Busstation anschließbar ist. Das Bussystem kann vorteilhafterweise als Master-Slave-System ausgebildet sein, wobei dann die erfindungsgemässe Busstation als Slave-Station ausgebildet ist.

Durch die in den abhängigen Ansprüchen aufgeführten Maßnahmen und Weiterbildungen, sind vorteilhafte Verbesserungen der im unabhängigen Patentanspruch angegebenen Busstation möglich.

Vorteilhafter Weise wird die Logikschaltung aus UND-Gattern und einem Oder-Gatter aufgebaut, wobei die UND-Gatter jeweils die entsprechenden Bits des Registerworts, das in einem Register abgelegt ist und des Decodierworts, das am Ausgang des Decoders anliegt, miteinander vergleichen. Die Ausgangssignale der UND-Verknüpfungen werden dann mit einer ODER-Verknüpfung miteinander verglichen. Gibt eine UND-Verknüpfung eine 1 als Ausgangssignal aus, dann kommt es durch die ODER-Verknüpfung zu einem Freigabesignal für die Busstation. Alternativ ist es möglich, diese Funktionen auch in Software zu realisieren.

### Zeichnung

Ausführungsbeispiele der Erfindung sind in der Zeichnung dargestellt und werden in der nachfolgenden Beschreibung näher erläutert. Es zeigt Figur 1 ein paralleles Bussystem, Figur 2 ein serielles Bussystem, Figur 3 einen Vergleich des Decodier- und des Registerworts und Figur 4 ein Blockschaltbild der erfindungsgemässen Busstation.

### Beschreibung

Bussysteme werden aufgrund des geringeren Leitungsbedarfs in immer mehr technischen Gebieten eingesetzt. Ein wichtiger Anwendungsfall ist, dass mehrere Busstationen gleichzeitig mit einer Adresse angesprochen werden sollen. Diese Adressen werden Gruppenadressen genannt. Unterschiedliche Busstationen haben z.T. unterschiedliche Aufgaben und müssen daher unterschiedlich oft angesprochen werden, so dass eine große Flexibilität der Gruppenadressierung hier notwendig ist. Insbesondere bei einem Bus für Rückhaltesysteme ist so eine flexible Gruppenadressierung notwendig, da hier Sensoren mit unterschiedlichen Wiederholraten und Datenbreiten an den Bus angeschlossen werden. Hier wird das sogenannte Polling eingesetzt, indem die einzelnen Sensoren zur Abgabe von Informationen, also beispielsweise Sensorsignalen, aufgefordert werden. Da einzelne Sensoren unterschiedlich oft angesprochen werden sollen, ist hier eine flexible Gruppenadressierung von Nutzen. Die Sensoren sind dabei als Busstationen ausgebildet.

Erfindungsgemäss werden nun die einzelnen Busstationen so ausgebildet, dass die Gruppenadresse in eine dezimale Gruppenadresse umgewandelt wird, um die Flexibilität der dezimalen Zahlen zu verwenden. Dabei ist es nun möglich, dass beispielsweise nur die geraden oder ungeraden Zahlen zur Gruppenadressierung verwendet werden. Bei dieser Umsetzung wird dann nur ein Bit in einem Decodierwort gesetzt, das die entsprechende Dezimalzahl repräsentiert. Ist beispielsweise die maximale dezimale Zahl der Gruppenadressen sechzehn, dann werden sechszehn Bits verwendet, um die unterschiedlichen dezimalen Zahlen eins bis sechzehn durch das Setzen des jeweiligen Bits anzuzeigen. Damit wird auch klar, dass maximal in einer nachfolgenden Logikschaltung nur eine UND-Verknüpfung, wobei die UND-Gatter in der Logikschaltung bitweise das Dekodierwort und das Registerwort vergleichen, zu einer logischen Eins am Ausgang führen kann. Bei genau dieser UND-Verknüpfung muß das Registerwort, das in der Busstation fest abgespeichert ist, auch eine Eins aufweisen. Es liegt also auch ein Registerwort vor, das auch sechzehn Bits aufweist, in dem die jeweiligen Bits gesetzt sind, die zur Gruppenadressierung verwendet werden.

Durch eine nachfolgende ODER-Verknüpfung der Ausgänge der UND-Verknüpfungen wird dann überprüft, ob es zu einer 1 am Ausgang einer UND-Verknüpfung gekommen ist. Ist das der Fall, dann zeigt auch die ODER-Verknüpfung eine Eins am Ausgang an und ein Freigabesignal für die Busstation wird erzeugt. Dieses Freigabesignal bedingt dann, dass beispielsweise eine Busstation, die als Sensor ausgebildet ist, Sensorsignale über den Bus versendet.

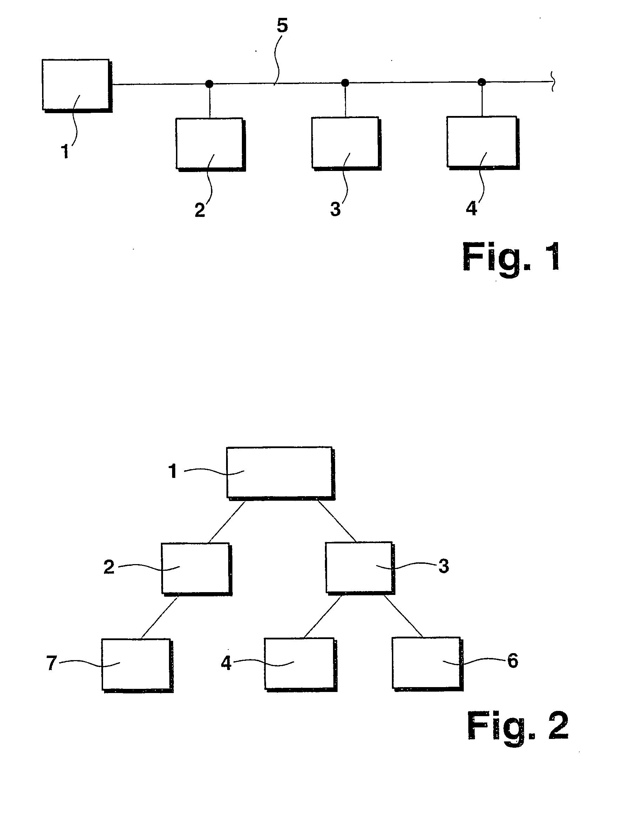

In Figur 1 ist eine parallele Busarchitektur dargestellt. Die Busstationen 1, 2, 3 und 4 sind an einen Bus 5, beispielsweise einen CAN-Bus, angeschlossen. Es gibt hier zwei Möglichkeiten der Busorganisation. Einmal kann eine Master-Slave-Architektur vorgesehen sein, dann ist beispielsweise die Busstation 1 der Master und die Busstationen 2, 3 und 4 die Slaves. Der Master kann dann in einem Abfragemodus die einzelnen Slaves auffordern, Daten über den Bus 5 zu senden. Eine weitere Möglichkeit ist ein Multi-Master-System, das beispielsweise vom Can-Bus bekannt ist. In diesem Fall kommt es zu einem Arbitrierungs-Abschnitt, in dem die einzelnen Busstationen um das Recht kämpfen, Daten über den Bus 5 zu senden. Bei beiden Bussystem, dem Master-Slave und dem Multi-Master ist die Verwendung von Gruppenadressen sinnvoll, da eine Busstation an mehrere Busstationen Daten senden kann oder von diesen empfangen kann.

Figur 2 zeigt einen seriellen Bus, wie er beispielsweise vom Fire-Wire-Bus-System bekannt ist. Die Busstation 1 ist nun an die Busstationen 2 und 3 angeschlossen, wobei an die Busstation 2 die Busstation 7 und an die Busstation 3 die Busstationen 4 und 6 jeweils angeschlossen sind. Auch hier ist eine Gruppenadressierung sinnvoll.

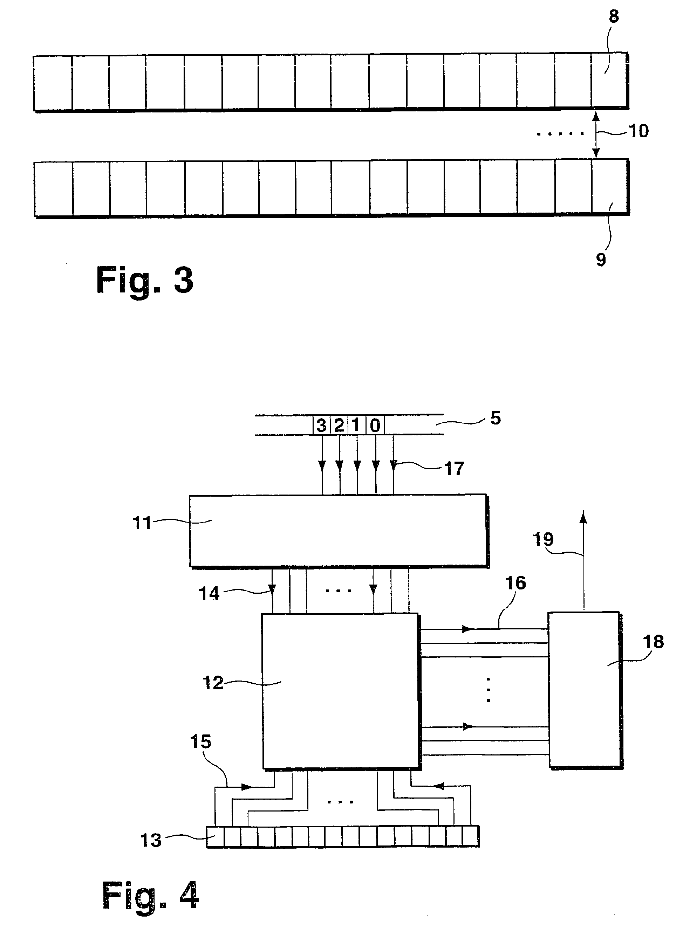

Figur 4 zeigt nun als Blockschaltbild den Aufbau einer erfindungsgemässen Busstation. Über den Bus 5 erhält die Busstation eine Gruppenadresse. Ein Decoder 11 ist über Eingangsleitungen 17 an den Bus über ein nicht dargestellten Bus-Contoller angeschlossen. Der Bus-Controller erlaubt also, dass die Gruppenadressen in die Busstationen über die dargestellten 4 Leitungen 17 zum Decoder 11 übertragen werden.

Der Decoder 11 ist über Ausgangsleitugen 14 mit einer Logikschaltung 12 verbunden. Die Logikschaltung 12 weist UND-Gatter auf, die die einzelnen Leitungen des Decoders 11 mit den Ausgangsleitungen eines Maskenregisters 13 jeweils paarweise, also bitweise verknüpfen. Die Ausgangssignale der Logikschaltung 12, das sind die Ausgänge der einzelnen UND-Gatter, führen dann über Leitungen 16 in ein Oder-Gatter 18, das die einzelnen Ausgangssignale miteinander oderverknüpft. Ein Ausgangssignal 19 des Oder-Gatters 18 gibt an, ob ein Freigabesignal für die Busstation gesetzt werden kann oder nicht. Dieses Freigabesignal wird nur dann erzeugt, wenn eine der Leitungen 16 eine logische Eins führt.

Die Logikschaltung 12 weist hier im Beispiel 16 UND-Gatter auf, da die beiden Worte, die hier miteinander verknüpft werden, nämlich, die in Figur 3 dargestellten Decodier- 8 und Registerworte 9, jeweils bitweise miteinander über Verknüpfungen 10 und hier sind es UND-Gatter, verglichen werden. Da die beiden Worte jeweils sechzehn Bits aufweisen, sind auch sechzehn UND-Gatter vorhanden und damit auch sechzehn Leitungen, die zum Oder-Gatter 18 führen. Die Gruppenadressen, die über die Leitungen in den Decoder 11 führen, werden vom Decoder, beispielsweise von einer hexadezimalen Darstellung, in eine dezimale Darstellung überführt. Da vorher die Menge der dezimalen Zahlen bekannt ist, also wieviel dezimale Zahlen durch die Gruppenadressen codiert werden können, hier sind es sechzehn, werden so viel Bits am Ausgang des Decoders vorgesehen, wie viele dezimale Zahlen durch die Gruppenadressen codiert werden können. Damit liegen sechzehn Ausgänge am Decoder vor. Das heißt, das Decodierwort weist sechzehn Bits auf. Nur ein Bit davon ist gesetzt, nämlich das, das die dezimale Zahl anzeigt. Ist also die Zahl 3 gemeint, dann ist das dritte Bit gesetzt, wobei hier die Zahlen von 1 bis 16 codiert werden. Das Registerwort, das die einzelnen Gruppenadressen, die für die Busstation zulässig sind, enthält, ist im Register 13 fest abgespeichert. Auch dieses weist 16 Bits, wobei hier mehrere Bits gesetzt werden können, die eben mehreren dezimalen Zahlen entsprechen, die zulässige Adressen für die Busstation bedeuten. Beispielsweise können hier alle geraden Zahlen codiert sein, so dass alle geraden Gruppenadressen als zulässig für die Busstation erkannt werden.

Die Logikschaltung 12 der Decoder 11 sowie die Oder-Verknüpfung 18 und das Maskenregister 13 können auf einem Chip als Digitalschaltung hergestellt werden. Neben den hier dargestellten Komponenten, sind in der Busstation noch weitere Komponenten, wie der Bus-Controller, Sensoren und weitere Verarbeitungseinheiten vorhanden. Auch eine Energieversorgung ist vorzusehen. Welche Einheiten zusätzlich vorhanden sind, hängt insbesondere von dem Anwendungsfall der Busstation ab. Handelt es sich bei der Busstation beispielsweise um einen Sensor, dann muß auch ein Sensorelement, ein Meßverstärker und eine Analaog-DigitalWandlung vorhanden sein. Dies kann bei einem Sensorbus in einem Kraftfahrzeug, beispielsweise ein Beschleunigungssensor, ein Drucksensor oder ein Temperatursensor sein. Handelt es sich bei der Busstation um Rückhaltemittel, dann ist eine Zündkreisansteuerung, eine Energiereserve und eine Zündpille vorzusehen. Es sind jedoch auch andere Anwendungen, wie beispielsweise ein Multimedia-Bus im Kraftfahrzeug hier vorstellbar, dass also beispielsweise ein Navigationsgerät, ein CD-Spieler oder ein Autoradio oder ein Mobiltelefon an dem Bus als erfindungsgemässe Busstation angeschlossen werden.

Neben solchen Kraftfahrzeuganwendungen sind auch Anwendungen im Hausbereich, beispielsweise ein Installationsbus oder ein Sensorbus in einem Haus, beispielsweise zur Überwachung oder auch Busstationen in einer Nebenstellenanlage, also einem Vermittlungsrechner.

## Patentansprüche

1. Busstation, wobei die Busstation (1 bis 4, 6, 7) mit wenigstens einer Gruppenadresse adressierbar ist, wobei die Busstation (1 bis 4, 6, 7) ein Register (13), in dem die zulässigen Gruppenadressen als ein Registerwort (9) abgespeichert sind und eine Logikschaltung (12, 18) zum Vergleich des Decodierworts (8) und des Registerworts (9) aufweist, wobei die Logikschaltung (12, 18) in Abhängigkeit von dem Vergleich ein Freigabesignal erzeugt, **dadurch gekennzeichnet, dass** die Busstation (1 bis 4, 6, 7) als Slave-Station ausgebildet ist, dass die Busstation (1 bis 4, 7, 7) weiterhin als Sensor oder Rückhaltemittel ausgebildet ist, dass die Busstation (1 bis 4, 6, 7) einen Decoder (11) zur Umsetzung einer über den Bus empfangenen Gruppenadresse in eine dezimale Gruppenadresse, die eine entsprechende Dezimalzahl repräsentiert aufweist, wobei der Decoder (11) in einem Decodierwort (8) ein Bit für die dezimale Gruppenadresse setzt, wobei die Logikschaltung (12, 18) in Abhängigkeit von dem Vergleich das Freigabesignal für die Busstation (1 bis 4, 6, 7) erzeugt.

2. Busstation nach Anspruch 1, **dadurch gekennzeichnet, dass** die Logikschaltung (12, 18) UND-Gatter und ein Oder-Gatter(18) aufweist, wobei die Bits des Decodier- und des Registerworts (8, 9) angeschlossen sind und dass die Ausgänge der UND-Gatter an die Eingänge des Oder-Gatters (18) angeschlossen sind.

## Claims

1. Bus station, where the bus station (1 to 4, 6, 7) can be addressed using at least one group address, where the bus station (1 to 4, 6, 7) has a register (13), in which the admissible group addresses are stored as a register word (9), and a logic circuit (12, 18) for comparing the decoding word (8) and the register word (9), the logic circuit (12, 18) producing an enable signal on the basis of the comparison, **characterized in that** the bus station (1 to 4, 6, 7) is in the form of a slave station, **in that** the bus station (1 to 4, 6, 7) is also in the form of a sensor or restraining means, **in that** the bus station (1 to 4, 6, 7) has a decoder (11) for converting a group address received by the bus into a decimal group address which represents a corresponding decimal number, where the decoder (11) sets a bit for the decimal group address in a decoding word (8), with the logic circuit (12, 18) producing the enable signal for the bus station (1 to 4, 6, 7) on the basis of the comparison.

2. Bus station according to Claim 1, **characterized in that** the logic circuit (12, 18) has AND gates and an Or gate (18), the bits of the decoding and register words (8, 9) being connected, and **in that** the outputs of the AND gates are connected to the inputs of the Or gate (18).

## Revendications

1. Station à bus, (1 à 4, 6, 7) pouvant être adressée avec au moins une adresse de groupe, et présentant un registre (13) stockant les adresses de groupe admissibles en forme de mot de registre (9), et un circuit logique (12, 18) pour la comparaison du mot de décodage (8) avec le mot de registre (9), le circuit logique (12, 18) générant un signal de validation en fonction de la comparaison,
**caractérisée en ce que**
elle (1 à 4, 6, 7) est une station esclave, et également un capteur ou un moyen de retenue et comporte un décodeur (11) pour convertir une adresse de groupe reçue par l'intermédiaire du bus en une adresse de groupe décimale qui représente un nombre décimal correspondant, le décodeur (11) plaçant dans un mot de décodage (8) un bit pour l'adresse de groupe décimale, le circuit logique (12, 18) générant le signal de validation pour la station à bus (1 1 à 4, 6, 7) en fonction de la comparaison.

2. Station à bus selon la revendication 1,
**caractérisée en ce que**
le circuit logique (12, 18) présente des portes ET et une porte OU (18), les bits du mot de décodage et du mot de registre (8, 9) étant connectés, et les sorties des portes ET sont raccordées aux entrées de la porte OU (18).
